(19) **Europäisches Patentamt / European Patent Office / Office européen des brevets**

(11) **EP 4 676 044 A1**

(12) **EUROPEAN PATENT APPLICATION**
published in accordance with Art. 153(4) EPC

(43) Date of publication:
**07.01.2026  Bulletin 2026/02**

(21) Application number: **24781286.0**

(22) Date of filing: **29.03.2024**

(51) International Patent Classification (IPC):
$H04N\ 19/117^{(2014.01)}$      $H04N\ 19/82^{(2014.01)}$
$H04N\ 19/593^{(2014.01)}$     $H04N\ 19/513^{(2014.01)}$
$H04N\ 19/105^{(2014.01)}$     $H04N\ 19/176^{(2014.01)}$
$H04N\ 19/70^{(2014.01)}$       $H04N\ 19/54^{(2014.01)}$
$H04N\ 19/577^{(2014.01)}$     $H04N\ 19/132^{(2014.01)}$

(52) Cooperative Patent Classification (CPC):
H04N 19/105; H04N 19/117; H04N 19/132;
H04N 19/176; H04N 19/513; H04N 19/54;
H04N 19/577; H04N 19/593; H04N 19/70;
H04N 19/82

(86) International application number:
**PCT/KR2024/004016**

(87) International publication number:
**WO 2024/205296 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023  KR 20230041947**
**26.03.2024  KR 20240041429**

(71) Applicants:
• **Hyundai Motor Company**
**Seoul 06797 (KR)**
• **Kia Corporation**
**Seoul 06797 (KR)**
• **Ewha University-Industry Collaboration Foundation**
**Seoul 03760 (KR)**

(72) Inventors:
• **KANG, Je Won**
**Seoul 04069 (KR)**
• **LEE, Jung Kyung**
**Seoul 07987 (KR)**
• **SHIN, Ju Yeon**
**Seoul 03759 (KR)**
• **CHOI, Jung Ah**
**Seoul 05338 (KR)**
• **HEO, Jin**
**Yongin-si Gyeonggi-do 16836 (KR)**
• **PARK, Seung Wook**
**Yongin-si Gyeonggi-do 16847 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **VIDEO ENCODING/DECODING METHOD AND APPARATUS FOR PERFORMING INLOOP FILTERING BY USING NON-REGIONAL SAMPLE**

(57)  The present disclosure discloses video encoding/decoding method and apparatus and provides a video decoding method including generating from a bitstream a reconstructed block of a current block, and performing filtering by inputting the reconstructed block into an adaptive loop filter (ALF), wherein the performing of the filtering includes determining one or more reference samples of the current block by using at least one of an inter-prediction mode or an intra block copy (IBC), and performing the filtering by using the one or more reference samples.

**FIG. 8**

**Description**

CROSS-REFERENCE TO RELATED APPLICATION

This application claims priority from Korean Patent Application No. 10-2023-0041947 filed on March 30, 2023, and Korean Patent Application No. 10-2024-0041429 filed on March 26, 2024, the disclosures of which are incorporated by reference herein in their entirety.

[Technical Field]

The present disclosure in some embodiments relates to a video encoding/decoding method and apparatus for performing in-loop filtering by using non-regional samples. More particularly, the present disclosure relates to a video encoding/decoding method and apparatus for performing adaptive loop filtering by using temporally adjacent samples to the current block and a reference sample of an intra block copy (IBC) prediction.

[Background]

The statements in this section merely provide background information related to the present disclosure and do not necessarily constitute prior art.

Since video data has a large amount of data compared to audio or still image data, the video data requires a lot of hardware resources, including a memory, to store or transmit the video data without processing for compression.

Accordingly, an encoder is generally used to compress and store or transmit video data. A decoder receives the compressed video data, decompresses the received compressed video data, and plays the decompressed video data. Video compression techniques include H.264/Advanced Video Coding (AVC), High Efficiency Video Coding (HEVC), and Versatile Video Coding (VVC), which has improved coding efficiency by about 30% or more compared to HEVC.

However, since the image size, resolution, and frame rate gradually increase, the amount of data to be encoded also increases. Accordingly, a new compression technique providing higher coding efficiency and an improved image enhancement effect than existing compression techniques is required.

Recently, upsampling or super-resolution techniques have been utilized to improve the video quality of video frames. In particular, for in-loop filtering of chroma components, there is a need to provide efficient utilization of such upsampling or super-resolution imaging to increase video coding efficiency and enhance video quality.

[Disclosure]

[Technical Problem]

The present disclosure in some embodiments seeks to provide methods and apparatus for performing filtering based on an adaptive loop filter (ALF) by utilizing a reference sample within a reference picture that is temporally adjacent to the current picture.

The present disclosure further seeks to provide methods and apparatus for performing filtering based on an ALF by using a reference sample determined through an intra block copy (IBC).

The present disclosure further seeks to provide methods and apparatus for increasing video encoding/decoding efficiency.

The present disclosure further seeks to provide a recording medium storing a bitstream generated by video encoding/decoding methods or apparatus of the present disclosure.

The present disclosure further seeks to provide a method and device for transmitting a bitstream generated by the video encoding/decoding methods or apparatus of the present disclosure.

[Summary]

The present disclosure in at least one embodiment provides a video decoding method including generating from a bitstream a reconstructed block of a current block, and performing filtering by inputting the reconstructed block into an adaptive loop filter (ALF), wherein the performing of the filtering includes determining one or more reference samples of the current block by using at least one of an inter-prediction mode or an intra block copy (IBC), and performing the filtering by using the one or more reference samples.

The present disclosure in another embodiment provides a video encoding method including generating a reconstructed block of a current block, and performing filtering by inputting the reconstructed block into an ALF, wherein the performing of the filtering includes determining one or more reference samples of the current block by using at least one of an inter-prediction mode or an IBC, and performing the filtering by using the one or more reference samples.

Further, the present disclosure provides a method of transmitting a bitstream generated by the video encoding methods or apparatus according to the present disclosure.

Further, the present disclosure provides a recording medium storing a bitstream generated by the video encoding methods or apparatus according to the present disclosure.

Further, the present disclosure provides a recording medium storing a bitstream that is received, decoded, and utilized to reconstruct a video by the video decoding apparatus according to the present disclosure.

[Advantageous Effects]

As described above, the present disclosure in some embodiments can provide methods and apparatus for performing filtering based on an adaptive loop filter (ALF) by utilizing a reference sample within a reference picture that is temporally adjacent to the current picture.

Further, according to the present disclosure, methods and apparatus can be provided for performing filtering based on an ALF by using a reference sample determined through an intra block copy (IBC).

Further, the present disclosure can provide methods and apparatus for increasing video encoding/decoding efficiency.

Effects obtainable with the present disclosure are not limited to the above-mentioned effect, and other unmentioned effects could be clearly understood by those skilled in the art from the description below.

[Brief Description of the Drawings]

FIG. 1 is a block diagram of a video encoding apparatus that may implement the techniques of the present disclosure.

FIG. 2 illustrates a method for splitting a block using a quadtree plus binarytree ternarytree (QTBTTT) structure.

FIGS. 3A and 3B illustrate a plurality of intra prediction modes including wide-angle intra prediction modes.

FIG. 4 illustrates neighboring blocks of a current block.

FIG. 5 is a block diagram of a video decoding apparatus that may implement the techniques of the present disclosure.

FIG. 6 is a diagram illustrating the shape of an adaptive loop filter (ALF) according to at least one embodiment of the present disclosure.

FIG. 7 is a diagram illustrating the shape of an ALF according to another embodiment of the present disclosure.

FIG. 8 is a diagram illustrating the shape of an ALF according to yet another embodiment of the present disclosure.

FIG. 9 is a flowchart of a video decoding process according to at least one embodiment of the present disclosure.

FIG. 10 is a flowchart of a video encoding process according to at least one embodiment of the present disclosure.

[Detailed Description]

Hereinafter, some embodiments of the present disclosure are described in detail with reference to the accompanying illustrative drawings. In the following description, like reference numerals designate like elements, although the elements are shown in different drawings. Further, in the following description of some embodiments, detailed descriptions of related known components and functions when considered to obscure the subject of the present disclosure may be omitted for the purpose of clarity and for brevity.

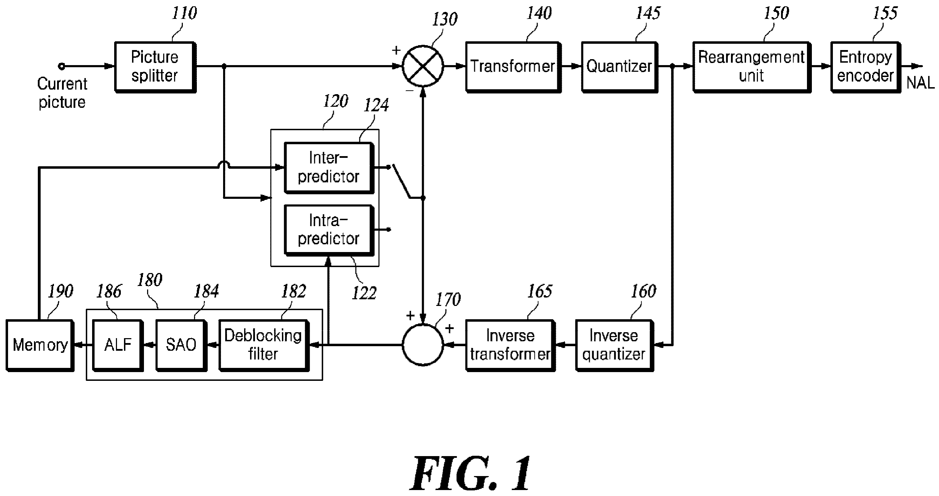

FIG. 1 is a block diagram of a video encoding apparatus that may implement technologies of the present disclosure. Hereinafter, referring to illustration of FIG. 1, the video encoding apparatus and components of the apparatus are described.

The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each component of the encoding apparatus may be implemented as hardware or software or implemented as a combination of hardware and software. Further, a function of each component may be implemented as software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each coding unit (CU) is encoded as a syntax of the CU, and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of a coding tree unit (CTU). Information on the size of the CTU (CTU size) is encoded as the syntax of the SPS or the PPS and delivered to a video decoding apparatus.

The picture splitter 110 splits each picture constituting the video into a plurality of coding tree units (CTUs) having a predetermined size and then recursively splits the CTU by using a tree structure. A leaf node in the tree structure becomes the coding unit (CU), which is a basic unit of encoding.

The tree structure may be a quadtree (QT) in which a higher node (or a parent node) is split into four lower nodes (or child nodes) having the same size. The tree structure may also be a binarytree (BT) in which the higher node is split into two lower nodes. The tree structure may also be a ternarytree (TT) in which the higher node is split into three lower nodes at a ratio of 1:2:1. The tree structure may also be a structure in which two or more structures among the QT structure, the BT structure, and the TT structure are mixed. For example, a quadtree plus binarytree (QTBT) structure may be used or a quadtree plus binarytree ternarytree (QTBTTT) structure may be used. Here, a binarytree ternarytree (BTTT) is added to the tree structures to be referred to as a multiple-type tree (MTT).

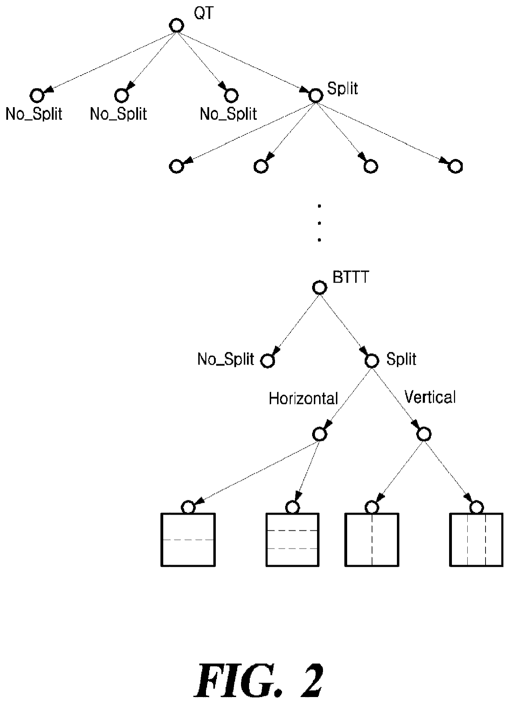

FIG. 2 is a diagram for describing a method for splitting a block by using a QTBTTT structure.

As illustrated in FIG. 2, the CTU may first be split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks asymmetrical to each other may be additionally present. The asymmetrical form may include a form in which the block of the corresponding node is split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block." As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block). The inter prediction includes both unidirectional prediction and bidirectional prediction.

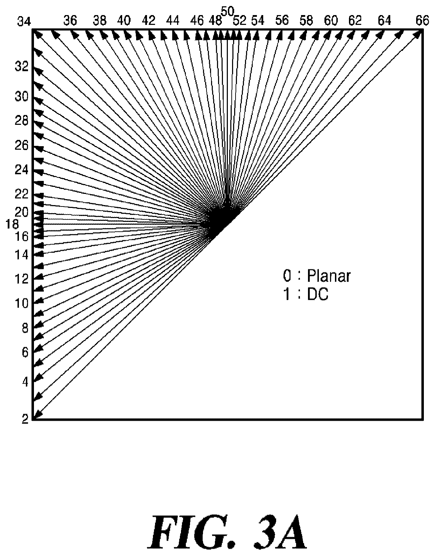

The intra predictor 122 predicts pixels in the current block by using pixels (reference pixels) positioned on a neighbor of the current block in the current picture including the current block. There is a plurality of intra prediction modes according to the prediction direction. For example, as illustrated in FIG. 3A, the plurality of intra prediction modes may include 2 non-directional modes including a Planar mode and a DC mode and may include 65 directional modes. A neighboring pixel and an arithmetic equation to be used are defined differently according to each prediction mode.

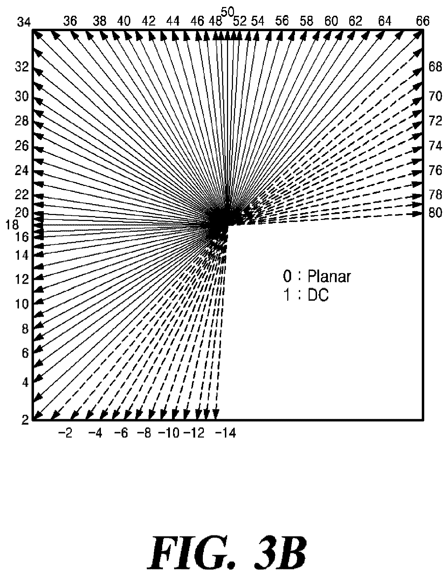

For efficient directional prediction for the current block having a rectangular shape, directional modes (#67 to #80, intra prediction modes #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and may also select an appropriate intra prediction mode to be used from tested modes. For example, the intra predictor 122 may calculate rate-distortion values by using a rate-distortion analysis for multiple tested intra prediction modes and may also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current block in the current picture and the prediction block in the reference picture. In general, motion estimation is performed for a luma component, and a motion vector calculated based on the luma component is used for both the luma component and a chroma component. Motion information including information on the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, and the like. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and including information on two motion vectors is delivered to the entropy encoder 155. Here, reference picture list 0 may be constituted by pictures before the current picture in a display order among pre-reconstructed pictures, and reference picture list 1 may be constituted by pictures after the current picture in the display order among the pre-reconstructed pictures. However, although not particularly limited thereto, the pre-reconstructed pictures after the current picture in the display order may be additionally included in reference picture list 0. Inversely, the pre-reconstructed pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

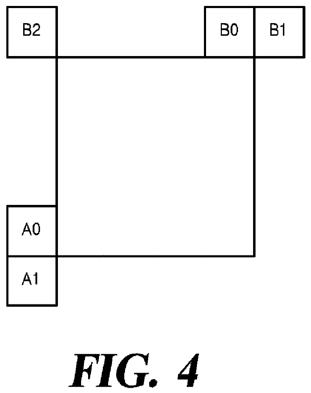

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

A merge skip mode is a special case of the merge mode. After quantization, when all transform coefficients for entropy encoding are close to zero, only the neighboring block selection information is transmitted without transmitting residual signals. By using the merge skip mode, it is possible to achieve a relatively high encoding efficiency for images with slight motion, still images, screen content images, and the like.

Hereafter, the merge mode and the merge skip mode are collectively referred to as the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be acquired by applying a pre-defined function (e.g., center value and average value computation, and the like) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms residual signals in a residual block having pixel values of a spatial domain into transform coefficients of a frequency domain. The transformer 140 may transform residual signals in the residual block by using a total size of the residual block as a transform unit or also split the residual block into a plurality of subblocks and may perform the transform by using the subblock as the transform unit. Alternatively, the residual block is divided into two subblocks, which are a transform area and a non-transform area, to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu_sbt_pos_flag) are encoded by the entropy encoder 155 and signaled to the video decoding apparatus. Further, a size of the transform area subblock may have a size ratio of 1:3 based on the horizontal axis (or vertical axis). In this case, a flag (cu_sbt_quad_flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and may transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to quantized transform coefficients arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a high-frequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information, such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to reconstruct the residual block.

The adder 170 adds the reconstructed residual block and the prediction block generated by the predictor 120 to reconstruct the current block. Pixels in the reconstructed current block may be used as reference pixels when intra-predicting a next-order block.

The loop filter unit 180 performs filtering for the reconstructed pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the reconstructed blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating differences between the reconstructed pixels and original pixels, which occur due to lossy coding. The SAO filter 184 applies an offset as a CTU unit to enhance a subjective image quality and encoding efficiency. On the other hand, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The reconstructed block filtered through the deblocking filter 182, the SAO filter 184, and the ALF 186 is stored in the memory 190. When all blocks in one picture are reconstructed, the reconstructed picture may be used as a reference picture for inter predicting a block within a picture to be encoded afterwards.

The video encoding apparatus may store a bitstream of encoded video data in a non-transitory storage medium or transmit the bitstream to the video decoding device through a communication network.

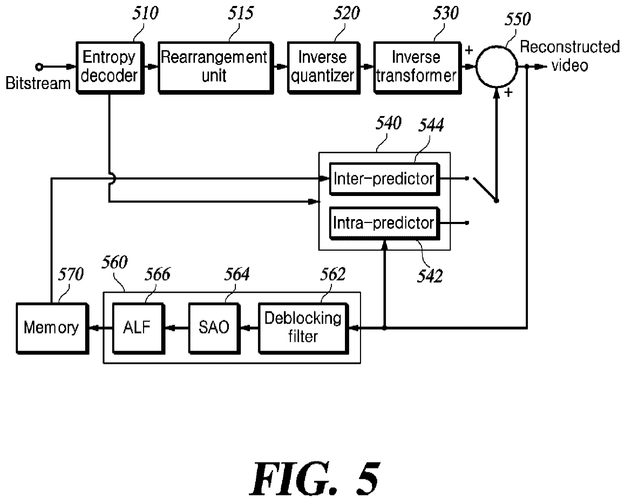

FIG. 5 is a functional block diagram of a video decoding apparatus that may implement the technologies of the present disclosure. Hereinafter, referring to FIG. 5, the video decoding apparatus and components of the apparatus are described.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for reconstructing the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU may be extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (mtt_split_flag), a split direction (vertical/horizontal), and/or a split type (binary/ternary) related to splitting of the MTT are extracted with respect to the node corresponding to the leaf node of the QT to split the corresponding leaf node into an MTT structure. As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur, or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT is further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by reconstructing the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu_sbt_pos_flag) of the subblock. The inverse transformer 530 also inversely transforms the transform coefficients of the corresponding subblock into the spatial domain from the frequency domain to reconstruct the residual signals and fills an area, which is not inversely transformed, with a value of "0" as the residual signals to generate a final residual block for the current block.

Further, when the MTS is applied, the inverse transformer 530 determines the transform index or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include an intra predictor 542 and an inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510.

The adder 550 reconstructs the current block by adding the residual block output from the inverse transformer 530 and the prediction block output from the inter predictor 544 or the intra predictor 542. Pixels within the reconstructed current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the reconstructed blocks in order to remove the blocking artifact, which occurs due to block unit decoding. The SAO filter 564 and the ALF 566 perform additional filtering for the reconstructed block after the deblocking filtering in order to compensate differences between the reconstructed pixels and original pixels, which occur due to lossy coding. The filter coefficients of the ALF are determined by using information on filter coefficients decoded from the bitstream.

The reconstructed block filtered through the deblocking filter 562, the SAO filter 564, and the ALF 566 is stored in the memory 570. When all blocks in one picture are reconstructed, the reconstructed picture may be used as a reference picture for inter predicting a block within a picture to be encoded afterwards.

The following embodiments may be performed by a plurality of components in the video encoding apparatus. They may also be performed by a plurality of components in the video decoding apparatus.

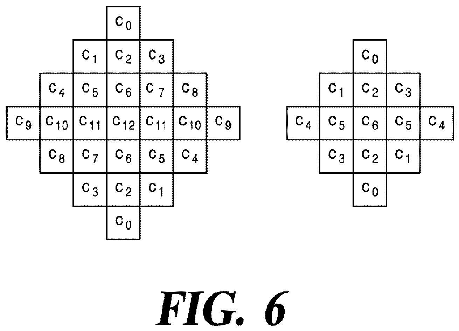

FIG. 6 is a diagram illustrating the shape of an adaptive loop filter (ALF) according to at least one embodiment of the present disclosure.

Referring to FIG. 6, the ALF 186 or 566 (185, 566) of the VVC utilizes an adaptive linear filter based on the Wiener-Hopf equation to approximate the reconstructed video frame to the original. The video encoding apparatus uses the output samples of the SAO 184 to calculate the filter coefficients of the ALF 186 based on bit-rate-distortion optimization and transmits them to the video decoding apparatus. The ALF 185 or 566, as illustrated in FIG. 6, is configured as 7×7 diamond shapes and 5×5 diamond shapes for luma and chroma samples, respectively. The filter shape and size may be determined by considering a tradeoff between coding efficiency and computational complexity. For example, the computational complexity of the ALF 185, 566 may be reduced by using a symmetric FIR filter.

To derive the filter coefficients $c_i$ illustrated in FIG. 6, samples are utilized at their relevant locations. The filtered sample I(x,y) at the current position (x,y) may be calculated as shown in Equation 1, subject to a precision operation of 7 bits.

$$\tilde{I}(x,y) = I(x,y) + \left[\left(\sum_{i=0}^{N-2} c_i r_i + 64\right) \gg 7\right]$$

Equation 1

Here, $r_i$ is the difference between the current sample and its neighboring sample, calculated according to Equation 2.

$$r_i = \min(b_i, \max(-b_i, I(x + x_i, y + y_i) - I(x,y))) \\ + \min(b_i, \max(-b_i, I(x - x_i, y - y_i) - I(x,y)))$$

Equation 2

Here, $b_i$ is a clipping parameter.

The ALF 185, 566 utilizes up to 25 sets of filter coefficients for the luma component and applies them to a 4×4 subblock. Based on the gradient information of the local blocks computed by using the Laplacian filter, the 4×4 subblocks are categorized into one of 25 classes. Specifically, the classification index for a class is derived from the combination of the five directional attributes, which represent the intensity and direction of the texture components, and the five activity attributes of the subblock. In addition, geometric transforms such as 90-degree rotation, diagonalization, and verticalization may be applied to the filter coefficients before filtering. By using geometric transforms to account for different directions, a wider variety of block characteristics may be processed by using fewer sets of filter coefficients.

In addition to the subblock level, the applicability may be determined at the CTU level. For the chroma component, up to eight filters are used at the CTU level. The chroma ALF may be enabled only if the luma ALF is enabled at that level.

Meanwhile, an adaptation parameter set (APS) is used to convey the ALF filter parameters, including a set of filter coefficients. As described above, up to 25 sets of filter coefficients may be calculated for the luma component and up to 8 sets of filter coefficients may be calculated for the chroma component. If the same ALF coefficients are used for different slices, the index of the reference APS may be signaled instead of redundantly retransmitting them.

In video applications such as High-Dynamic Range (HDR) and Wide Color Gamut (WCG), the reconstruction of video colors is critical. Cross-Component Adaptive Loop Filter (CC-ALF) uses the correlation between the current chroma sample and the positionally corresponding luma sample to modify the chroma sample in parallel with the ALF.

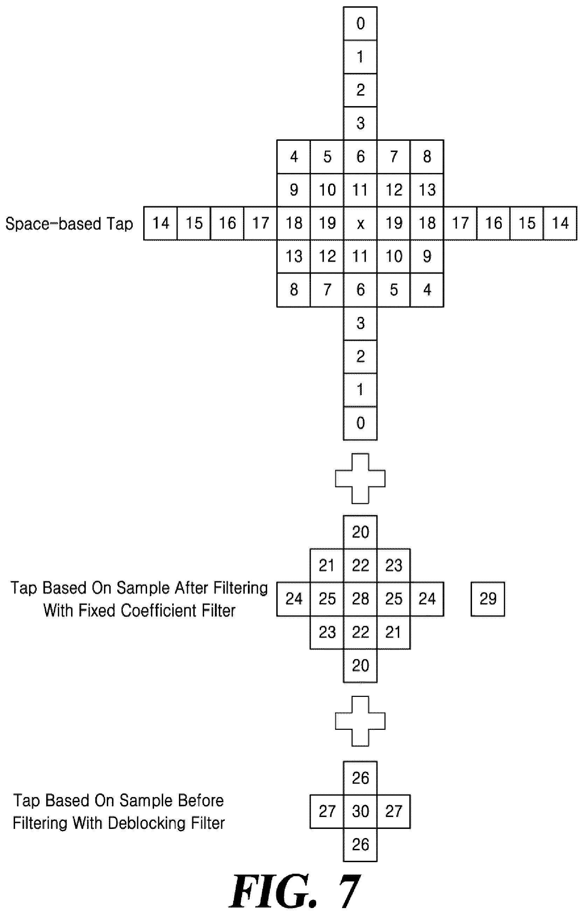

FIG. 7 is a diagram illustrating the shape of an adaptive loop filter (ALF) according to another embodiment of the present disclosure.

Referring to FIG. 7, the ALF 185, 566 may be composed of three types of filter taps with a crisscross shape, a $5\times5$ diamond shape, a $1\times1$ sample shape, and a $3\times3$ diamond shape. In this case, the ALF 185 or 566 is used for the current sample and samples that are crosswise adjacent to the current sample, samples after filtering with a fixed-coefficient filter, and samples before filtering with a deblocking filter, respectively. The shape of the filter and size of the filter may be determined by taking into account a tradeoff between coding efficiency and computational complexity. The filtering operation performed by using the ALF 185, 566 to improve the current sample $R(x, y)$ into $R'(x, y)$ may be calculated as shown in Equation 3.

$$R'(x,y) = R(x,y) + \left[\sum_{i=0}^{19} c_i\left(f_{i,0} + f_{i,1}\right)\right] + \left[\sum_{i=20}^{25} c_i\left(g_{i,0} + g_{i,1}\right)\right]$$
$$+ \left[\sum_{i=26}^{27} c_i\left(h_{i,0} + h_{i,1}\right)\right] + \left[\sum_{i=28}^{29} c_i g_i\right] + \left[\sum_{i=30}^{30} c_i h_i\right]$$

Equation 3

Here, 'f' may be the difference between the sample after filtering with the SAO filter and the current sample $R(x, y)$, 'g' may be the difference between the sample after filtering with the fixed-coefficient filter and the current sample $R(x, y)$, and 'h' may be the difference between the sample before filtering with the deblocking filter and the current sample $R(x, y)$.

**Video Prediction Method Using Deep Learning**

A video prediction network (VPN) is adapted to perform video interpolation or video extrapolation to predict a current frame from frames at one or more earlier time points or frames at one or more later time points. Video interpolation is a method of predicting a current frame from frames at earlier time points and frames at later time points. For example, video interpolation may be used to predict a frame at time t from a frame at time t-1 and a frame at time t+1. Video extrapolation is a method of predicting a frame at a later time from a frame at an earlier time and a frame at the current time. For example, video extrapolation may be used to predict frames at time t=n+1 through t=n+k from frames at time t=0 through t=n.

An optical flow is a pixel-by-pixel motion vector that represents the motion of pixels between frames. With optical flow, video interpolation and video extrapolation may be performed. For example, frames may be generated by predicting where pixels in the current frame will move in a frame at a later time point. By setting the output format of the optical flow to be the same as the dimension of the frame or the frame size, the optical flow at each pixel position may be outputted. This may formulate an optical flow map. Two optical flow maps may be outputted, representing motions in the x direction and y direction. For 8-bit images, each pixel in the optical flow may be represented by a value between 0 and 255. For 10-bit images, each pixel in the optical flow may be represented by a value between 0 and 1023. For example, for an 8-bit image, a pixel representation of 127 may have a zero optical flow, and a pixel representation of 0 or 255 may have a maximum optical flow. PWC-Net is one of the neural network algorithms that outputs an optical flow map. PWC-Net outputs different scales of optical flow in a pyramid and performs learning by warping between images in the feature map area.

Adaptive Convolution Networks (ACNs) learn with Convolution Neural Networks (CNNs) to simultaneously perform video prediction and pixel interpolation or extrapolation. ACNs directly output the frames to be predicted. Attention models are adapted to choose which areas to focus on and analyze when the deep learning model interprets the input. The attention model may look in the video for feature maps that are responsive to the target object of analysis and may weight the channel of interest. The attention model may extract attention on a frame-by-frame basis. By using the attention map outputted by the attention model, a mask may be applied to the input and output videos to perform video interpolation focused on significant information.

The ALF of the present disclosure can perform filtering by using a sample of a reference picture that is temporally adjacent to the current picture or a reference sample of an intra block copy (IBC) prediction. The following describes a method of performing filtering by using such an ALF. The following embodiments are described with reference to the video decoding apparatus, but they may also be performed by the video encoding apparatus.

## Method of Determining Reference Picture of Current Picture

The reference picture of the current picture may be lower in the temporal layers and thus may contain pixels that are closer to the original. The reference picture that is temporally closest to the current picture may include samples that are more temporally correlated with the current picture. The present disclosure describes the following methods of determining a reference picture of a current picture, including among others: determining the reference picture by prioritizing lower layers in the temporal layers, determining the reference picture that is temporally closest to the current picture, and determining the reference picture by prioritizing lower layers in the temporal layers within a decoded picture buffer (DPB), determining a reference picture among all pictures in the DPB, determining a co-located reference picture signaled from a slice header, determining the reference picture by the picture with the smallest index in reference picture list L0, or determining the reference picture by the picture with the smallest index in reference picture list L1. One or multiple reference pictures may be determined. In this case, the signaling of the ALF parameter may also carry the signal of the number of the reference picture list of the determined reference picture and the index of the determined reference picture.

## Method of Determining Reference Sample in Reference Picture

The ALF of the present disclosure can perform filtering by using a reference sample within the reference picture determined by the method of determining the reference picture of the current picture. The following describes a method of the present disclosure for determining a reference sample in the reference picture. The video decoding apparatus may determine a block of random size within the reference picture by using the position of the current pixel, and may use the determined randomly sized block's mean, median, mode, or maximum value to determine the reference sample. Here, the randomly sized block in the reference picture may be a block determined based on a position in the reference picture, corresponding to the position of the current pixel in the current picture. The video decoding apparatus may determine a reference block within the reference picture by using the motion vector, and may determine a reference sample in the reference block. For example, the video decoding apparatus may determine a reference block by using a motion vector stored in 4x4-block units, and determine a reference sample within the determined reference block.

The video decoding apparatus may determine a reference block by using a motion vector predicted by using an affine transform, and determine a reference sample within the reference block. The video decoding apparatus may determine the reference sample by averaging samples obtained from different reference pictures. The video decoding apparatus may determine the reference sample within the reference picture by using an optical flow map. The optical flow map may be generated by using a deep learning-based algorithm. The optical flow used may be those used for Bi-Directional Optical Flow (BDOF) or Prediction Refinement with Optical Flow (PROF). The video decoding apparatus may generate a reference picture by using video interpolation or video extrapolation, and determine a sample in the generated reference picture at the same position as the current sample, to be the reference sample.

## Method of Determining Reference Sample by Using Intra Block Copy (IBC)

The ALF of the present disclosure can perform filtering by using a reference sample determined by using an IBC. The following describes a method of determining the reference sample by using the IBC of the present disclosure. The video decoding apparatus may determine the reference sample by using the motion vector in the IBC when the current block is encoded in IBC mode. If the current block is not encoded in IBC mode, the video decoding apparatus may determine the reference sample by using the motion vector in the IBC, which has the least distortion. The video decoding apparatus may determine the reference sample by using template matching.

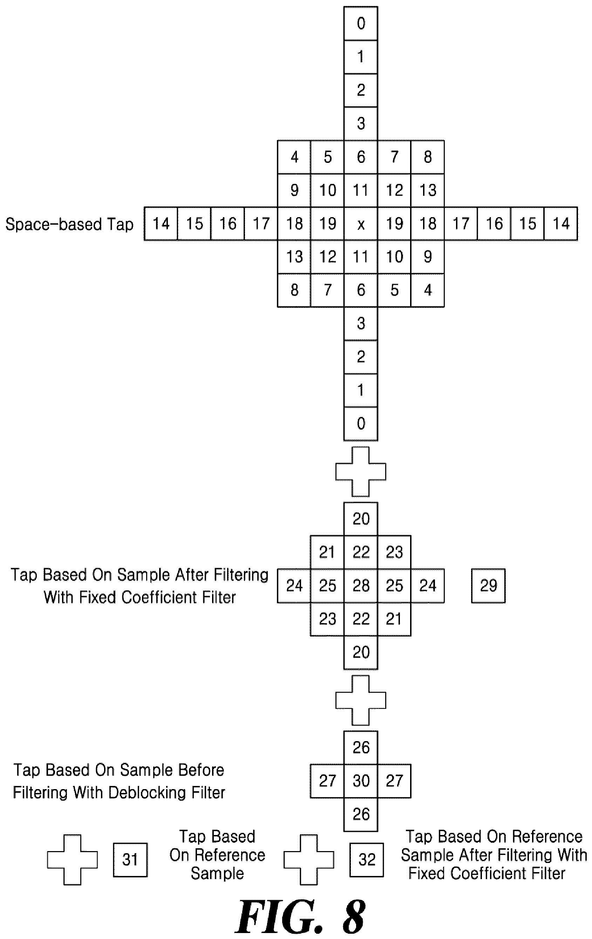

FIG. 8 is a diagram illustrating the shape of an ALF according to yet another embodiment of the present disclosure.

Referring to FIG. 8, the ALF 185 or 566 may be composed of five types of filter taps having a crisscross shape, a $5 \times 5$ diamond shape, a $1 \times 1$ sample shape, a $3 \times 3$ diamond shape, and two $1 \times 1$ sample shapes. In this case, the ALF 185 or 566 is used for the current sample, the samples that are crosswise adjacent to the current sample, the samples after filtering with the fixed-coefficient filter, the samples before filtering with the deblocking filter, the reference sample determined by the aforementioned process, and the reference sample after filtering with the fixed-coefficient filter, respectively. The shape of the filter and size of the filter may be determined by taking into account a tradeoff between coding efficiency and computational complexity. The filtering operation performed by using the ALF 185, 566 to improve the current sample R(x, y) into R'(x, y) may be calculated as shown in Equation 4.

$$R'^{(x,y)} = R(x,y) + \left[\sum_{i=0}^{19} c_i(f_{i,0} + f_{i,1})\right] + \left[\sum_{i=20}^{25} c_i(g_{i,0} + g_{i,1})\right]$$
$$+ \left[\sum_{i=26}^{27} c_i(h_{i,0} + h_{i,1})\right] + \left[\sum_{i=28}^{29} c_i g_i\right] + \left[\sum_{i=30}^{30} c_i h_i\right]$$
$$+ \left[\sum_{i=31}^{31} c_i p_i\right] + \left[\sum_{i=32}^{32} c_i pFilterd_i\right]$$

<div align="right">Equation 4</div>

Here, 'f' may be the difference between the sample after filtering with the SAO filter and the current sample R(x, y), $g_i$ may be the difference between the sample after filtering with the fixed-coefficient filter and the current sample R(x, y), and $h_i$ may be the difference between the sample before filtering with the deblocking filter and the current sample R(x, y). $p_i$ may be the difference between the determined reference sample and the current sample R(x, y), and pFilterdi may be the difference between the reference sample after filtering with the fixed-coefficient filter and the current sample R(x, y).
In another embodiment, the filtering operation performed by using the ALF 185, 566 to improve the current sample R(x, y) into R'(x, y) may be calculated as shown in Equation 5.

$$R'^{(x,y)} = R(x,y) + \left[\sum_{i=0}^{19} c_i(f_{i,0} + f_{i,1})\right] + \left[\sum_{i=20}^{21} c_i g_i\right]$$
$$+ \left[\sum_{i=22}^{24} c_i(h_{i,0} + h_{i,1})\right] + \left[\sum_{i=25}^{N} c_i(r_{i,0} + r_{i,1})\right]$$
$$+ \left[\sum_{i=30}^{30} c_i h_i\right] + \left[\sum_{i=31}^{31} c_i r_i\right] + \left[\sum_{i=32}^{32} c_i rFilterd_i\right]$$

<div align="right">Equation 5</div>

Here, 'f' may be the difference between the sample after filtering with the SAO filter and the current sample R(x, y), $g_i$ may be the difference between the sample after filtering with the fixed-coefficient filter and the current sample R(x, y), and $h_i$ may be the difference between the sample before filtering with the deblocking filter and the current sample R(x, y). $r_i$ may be the difference between the residual sample at the position of the determined reference sample and the current sample R(x, y), and rFilterd$_i$ may be the difference between the current sample R(x, y) and the residual sample at the position of the reference sample, after filtering with the fixed-coefficient filter.
In yet another embodiment, when filtering is performed by using each of two reference samples determined by using two reference pictures, the filtering operation performed by using ALF 185, 566 to improve the current sample R(x, y) into R'(x, y) may be calculated as shown in Equation 6.

$$R'(x,y) = R(x,y) + \left[\sum_{i=0}^{19} c_i(f_{i,0} + f_{i,1})\right] + \left[\sum_{i=20}^{25} c_i(g_{i,0} + g_{i,1})\right]$$
$$+ \left[\sum_{i=26}^{27} c_i(h_{i,0} + h_{i,1})\right] + \left[\sum_{i=28}^{29} c_i g_i\right] + \left[\sum_{i=30}^{30} c_i h_i\right] + \left[\sum_{i=31}^{31} c_i p_{i,1}\right]$$
$$+ \left[\sum_{i=32}^{32} c_i pFilterd_{i,1}\right] + \left[\sum_{i=31}^{31} c_i p_{i,2}\right] + \left[\sum_{i=32}^{32} c_i pFilterd_{i,2}\right]$$

<div align="right">Equation 6</div>

Here, 'f' may be the difference between the sample after filtering with the SAO filter and the current sample $R(x, y)$, $g_i$ may be the difference between the sample after filtering with the fixed-coefficient filter and the current sample $R(x, y)$, and $h_i$ may be the difference between the sample before filtering with the deblocking filter and the current sample $R(x, y)$. $p_{i,j}$ may be the difference between the reference sample determined from the jth reference picture and the current sample $R(x, y)$, and $pFilterd_{i,j}$ may be the difference between the current sample $R(x, y)$ and the reference sample determined from the jth reference picture, after filtering with the fixed-coefficient filter. When two or more reference samples are utilized, the reference samples may be determined based on at least one of the reference picture or the IBC. When two or more reference samples are utilized, the ALF may be used to select the reference block that causes the least distortion of the prediction block and to signal the index of the least distorted reference block.

In yet another embodiment, when performing filtering by using multiple different shaped filters other than a 1x1 shaped filter on the determined reference sample, the filtering operation performed by using the ALF 185, 566 to improve the current sample $R(x, y)$ into $R'(x, y)$ may be calculated as shown in Equation 7.

$$R'(x,y) = R(x,y) + \left[\sum_{i=0}^{19} c_i(f_{i,0} + f_{i,1})\right] + \left[\sum_{i=20}^{25} c_i(g_{i,0} + g_{i,1})\right]$$
$$+ \left[\sum_{i=26}^{27} c_i(h_{i,0} + h_{i,1})\right] + \left[\sum_{i=28}^{29} c_i g_i\right] + \left[\sum_{i=30}^{30} c_i h_i\right]$$
$$+ \left[\sum_{i=31}^{37} c_i p_i\right] + \left[\sum_{i=38}^{38} c_i pFilterd_i\right]$$

<div align="right">Equation 7</div>

Here, 'f' may be the difference between the sample after filtering with the SAO filter and the current sample $R(x, y)$, $g_i$ may be the difference between the sample after filtering with the fixed-coefficient filter and the current sample $R(x, y)$, and $h_i$ may be the difference between the sample before filtering with the deblocking filter and the current sample $R(x, y)$. $p_i$ may be the difference between the determined reference sample and the current sample $R(x, y)$, and $pFilterd_i$ may be the difference between the reference sample after filtering with the fixed-coefficient filter and the current sample $R(x, y)$.

### Signaling of Information about ALF

The video encoding apparatus may signal a flag indicating whether ALF is to be applied. The applicability of ALF may be determined on a sequence, picture, sub-picture, slice, tile, or coding tree unit (CTU) basis. The video encoding apparatus may signal the filter coefficient of the ALF by using an Adaptation Parameter Set (APS). The filter coefficient of the ALF may be a coefficient predefined in the video encoding apparatus or the video decoding apparatus. The filter coefficient of the ALF may be the same as that of an existing ALF. The video encoding apparatus may determine which filter to use and signal an index for the determined filter.

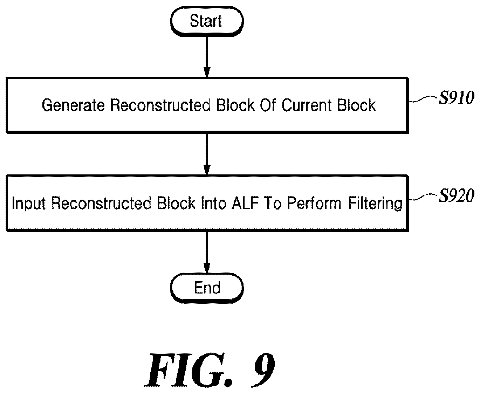

FIG. 9 is a flowchart of a video decoding process according to at least one embodiment of the present disclosure.

Referring to FIG. 9, the video decoding apparatus generates a reconstructed block of the current block from the bitstream (S910). The video decoding apparatus inputs the reconstructed block into the ALF to perform filtering (S920). The process of performing the filtering may include determining one or more reference samples of the current block by using at least one of inter-prediction mode or IBC, and performing the filtering by using the one or more reference samples.

When using the inter-prediction mode, the determining of the one or more reference samples may include determining one or more reference pictures that are temporally adjacent to the current picture and determining one or more reference samples from the one or more reference pictures. The one or more reference pictures may be determined based on at least one of a temporal layer, its temporal distance from the current picture, a DPB, a co-located reference picture, or an index of a reference picture list. The one or more reference samples may be determined based on at least one of a block determined based on a current block, in the one or more reference pictures, a block determined by using a motion vector, in the one or more reference pictures, or a block determined by using a motion vector by an affine transform, in the one or more reference pictures.

The one or more reference samples may be determined by using an optical flow map from the one or more reference pictures. The optical flow map may be determined based on at least one of a deep learning algorithm, BDOF, or PROF. When using the IBC, the determining of the one or more reference samples may include determining the one or more reference samples by using a motion vector in the IBC.

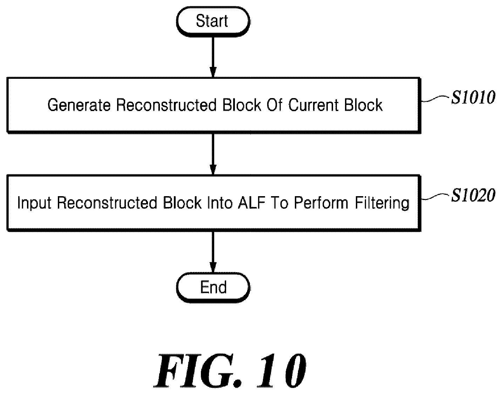

FIG. 10 is a flowchart of a video encoding process according to at least one embodiment of the present disclosure.

Referring to FIG. 10, the video encoding apparatus generates a reconstructed block of the current block (S1010). The video encoding apparatus inputs the reconstructed block into the ALF to perform filtering (S1020). The performing of the filtering may include determining one or more reference samples of the current block by using at least one of inter-prediction mode or IBC, and performing the filtering by using the one or more reference samples.

When using the inter-prediction mode, the determining of the one or more reference samples may include determining one or more reference pictures that are temporally adjacent to the current picture and determining one or more reference samples from the one or more reference pictures. The one or more reference pictures may be determined based on at least one of a temporal layer, its temporal distance from the current picture, a DPB, a co-located reference picture, or an index of a reference picture list. The one or more reference samples may be determined based on at least one of a block determined based on a current block, in the one or more reference pictures, a block determined by using a motion vector, in the one or more reference pictures, or a block determined by using a motion vector by an affine transform, in the one or more reference pictures.

The one or more reference samples may be determined by using an optical flow map from the one or more reference pictures. The optical flow map may be determined based on at least one of a deep learning algorithm, BDOF, or PROF. When using the IBC, the determining of the one or more reference samples may include determining the one or more reference samples by using a motion vector in the IBC.

Although the steps in the respective flowcharts are described to be sequentially performed, the steps merely instantiate the technical idea of some embodiments of the present disclosure. Therefore, a person having ordinary skill in the art to which this disclosure pertains could perform the steps by changing the sequences described in the respective drawings or by performing two or more of the steps in parallel. Hence, the steps in the respective flowcharts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in the present disclosure are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium may include, for example, various types of recording devices in which data is stored in a form readable by a computer system. For example, the non-transitory recording medium may include storage media, such as erasable programmable read-only memory (EPROM), flash drive, optical drive, magnetic hard drive, and solid state drive (SSD) among others.

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which the present disclosure pertains should understand that the scope of the present disclosure should not be limited by the above explicitly described embodiments but by the claims and equivalents thereof.

**Claims**

1. A video decoding method, comprising:

   generating from a bitstream a reconstructed block of a current block; and
   performing filtering by inputting the reconstructed block into an adaptive loop filter (ALF),
   wherein the performing of the filtering comprises:

   determining one or more reference samples of the current block by using at least one of an inter-prediction mode or an intra block copy (IBC); and
   performing the filtering by using the one or more reference samples.

2. The video decoding method of claim 1, wherein the determining the one or more reference samples, when using the inter-prediction mode, comprises:

   determining one or more reference pictures that are temporally adjacent to a current picture; and
   determining the one or more reference samples from the one or more reference pictures.

3. The video decoding method of claim 2, wherein the determining the one or more reference samples further comprises:
   determining the one or more reference pictures based on at least one of a temporal layer, a temporal distance from the current picture, a decoded picture buffer (DPB), a co-located reference picture, or an index of a reference picture list.

4. The video decoding method of claim 2, wherein the determining the one or more reference samples further comprises:
   determining the one or more reference samples based on at least one of a block determined based on the current block, in the one or more reference pictures, a block determined by using a motion vector, in the one or more reference pictures, or a block determined by using a motion vector by an affine transform, in the one or more reference pictures.

5. The video decoding method of claim 2, wherein the determining the one or more reference samples further comprises:

   determining the one or more reference samples from the one or more reference pictures by using an optical flow map,
   wherein the optical flow map is determined based on at least one of a deep learning algorithm, a bi-directional optical flow (BDOF), or a prediction refinement with optical flow (PROF).

6. The video decoding method of claim 1, wherein the determining the one or more reference samples, when using the IBC, comprises:
   determining the one or more reference samples by using a motion vector in the IBC.

7. A video encoding method, comprising:

   generating a reconstructed block of a current block; and
   performing filtering by inputting the reconstructed block into an adaptive loop filter (ALF),
   wherein the performing of the filtering comprises:

   determining one or more reference samples of the current block by using at least one of an inter-prediction mode or an intra block copy (IBC); and
   performing the filtering by using the one or more reference samples.

8. The video encoding method of claim 7, wherein the determining of the one or more reference samples, when using the inter-prediction mode, comprises:

   determining one or more reference pictures that are temporally adjacent to a current picture; and
   determining the one or more reference samples from the one or more reference pictures.

9. The video encoding method of claim 8, wherein the determining the one or more reference samples further comprises:
   determining the one or more reference pictures based on at least one of a temporal layer, a temporal distance from the current picture, a decoded picture buffer (DPB), a co-located reference picture, or an index of a reference picture list.

10. The video encoding method of claim 8, wherein the determining the one or more reference samples further comprises: determining the one or more reference samples based on at least one of a block determined based on the current block, in the one or more reference pictures, a block determined by using a motion vector, in the one or more reference pictures, or a block determined by using a motion vector by an affine transform, in the one or more reference pictures.

11. The video encoding method of claim 8, wherein the determining the one or more reference samples further comprises:

determining the one or more reference samples from the one or more reference pictures by using an optical flow map,

wherein the optical flow map is determined based on at least one of a deep learning algorithm, a bi-directional optical flow (BDOF), or a prediction refinement with optical flow (PROF).

12. The video encoding method of claim 7, wherein the determining the one or more reference samples, when using the IBC, comprises: determining the one or more reference samples by using a motion vector in the IBC.

13. A computer-readable recording medium storing a bitstream generated by a video encoding method that comprises:

generating a reconstructed block of a current block; and
performing filtering by inputting the reconstructed block into an adaptive loop filter (ALF),
wherein the performing of the filtering comprises:

determining one or more reference samples of the current block by using at least one of an inter-prediction mode or an intra block copy (IBC); and
performing the filtering by using the one or more reference samples.

**FIG. 1**

EP 4 676 044 A1

**FIG. 2**

**FIG. 3A**

FIG. 3B

## FIG. 4

**FIG. 5**

## FIG. 6

Space-based Tap

|     |     |     |     | 0   |     |     |     |     |     |     |
|-----|-----|-----|-----|-----|-----|-----|-----|-----|-----|-----|
|     |     |     |     | 1   |     |     |     |     |     |     |
|     |     |     |     | 2   |     |     |     |     |     |     |
|     |     |     |     | 3   |     |     |     |     |     |     |
| 4   | 5   | 6   | 7   | 8   |     |     |     |     |     |     |
| 9   | 10  | 11  | 12  | 13  |     |     |     |     |     |     |

| 14 | 15 | 16 | 17 | 18 | 19 | x  | 19 | 18 | 17 | 16 | 15 | 14 |

|     |     |     |     | 13  | 12  | 11  | 10  | 9   |
|-----|-----|-----|-----|-----|-----|-----|-----|-----|
|     |     |     |     | 8   | 7   | 6   | 5   | 4   |

0

1

2

3

Tap Based On Sample After Filtering
With Fixed Coefficient Filter

20

21 | 22 | 23

24 | 25 | 28 | 25 | 24         29

23 | 22 | 21

20

Tap Based On Sample Before
Filtering With Deblocking Filter

26

27 | 30 | 27

26

# FIG. 7

FIG. 8

Start

Generate Reconstructed Block Of Current Block — *S910*

Input Reconstructed Block Into ALF To Perform Filtering — *S920*

End

# FIG. 9

```
           ( Start )
               │
               ▼
┌─────────────────────────────────────────────┐
│  Generate Reconstructed Block Of Current Block │──── S1010
└─────────────────────────────────────────────┘
               │
               ▼
┌─────────────────────────────────────────────┐
│ Input Reconstructed Block Into ALF To Perform Filtering │──── S1020
└─────────────────────────────────────────────┘
               │
               ▼
            ( End )
```

# FIG. 10

## INTERNATIONAL SEARCH REPORT

| International application No. |
|---|
| **PCT/KR2024/004016** |

| A. | CLASSIFICATION OF SUBJECT MATTER |
|---|---|

**H04N 19/117**(2014.01)i; **H04N 19/82**(2014.01)i; **H04N 19/593**(2014.01)i; **H04N 19/513**(2014.01)i; **H04N 19/105**(2014.01)i; **H04N 19/176**(2014.01)i; **H04N 19/70**(2014.01)i; **H04N 19/54**(2014.01)i; **H04N 19/577**(2014.01)i; **H04N 19/132**(2014.01)i

According to International Patent Classification (IPC) or to both national classification and IPC

| B. | FIELDS SEARCHED |
|---|---|

Minimum documentation searched (classification system followed by classification symbols)

H04N 19/117(2014.01); H04N 19/105(2014.01); H04N 19/50(2014.01); H04N 19/59(2014.01); H04N 19/86(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: ALF(Adaptive Loop Filter), 인터(inter), IBC(intra block copy), 참조(reference)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0077906 A (ELECTRONICS AND TELECOMMUNICATIONS RESEARCH INSTITUTE) 09 June 2022 (2022-06-09) See paragraphs [0056]-[0066]; claim 1; and figures 3-5. | 1-13 |
| A | KR 10-2014-0019221 A (ELECTRONICS AND TELECOMMUNICATIONS RESEARCH INSTITUTE) 14 February 2014 (2014-02-14) See paragraphs [0196]-[0212]; claims 4-10; and figure 17. | 1-13 |
| A | KR 10-2022-0006054 A (BEIJING BYTEDANCE NETWORK TECHNOLOGY CO., LTD. et al.) 14 January 2022 (2022-01-14) See claims 1-5. | 1-13 |
| A | MA, Changyue et al. EE2-5.1: Using prediction samples or residual samples for adaptive loop filter. JVET-AC0162-v1, Joint Video Experts Team (JVET) of ITU-T SG WP 3 and ISO/IEC JTC 1/SC 29/WG 11, 29th Meeting: teleconference. 05 January 2023. See pages 1-3. | 1-13 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 July 2024** | **19 July 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/004016** |

**C.    DOCUMENTS CONSIDERED TO BE RELEVANT**

| Category* | Citation of document, with indication, where appropriate, of the relevant passages | Relevant to claim No. |
| --- | --- | --- |
| A | LI, Junru et al. EE1-1.6-related: ALF with Samples before Deep In-Loop Filter. JVET-AA0115-v1, Joint Video Experts Team (JVET) of ITU-T SG WP 3 and ISO/IEC JTC 1/SC 29/WG 11, 27th Meeting: teleconference. 07 July 2022.<br>See pages 1-2. | 1-13 |

Form PCT/ISA/210 (second sheet) (July 2022)

**INTERNATIONAL SEARCH REPORT**
Information on patent family members

International application No.

**PCT/KR2024/004016**

| Patent document cited in search report | | | Publication date (day/month/year) | Patent family member(s) | | | Publication date (day/month/year) |
|---|---|---|---|---|---|---|---|
| KR | 10-2022-0077906 | A | 09 June 2022 | CN | 104137549 | A | 05 November 2014 |
| | | | | CN | 104137549 | B | 10 December 2019 |
| | | | | EP | 2806635 | A1 | 26 November 2014 |
| | | | | JP | 2015-080240 | A | 23 April 2015 |
| | | | | JP | 6101709 | B2 | 22 March 2017 |
| | | | | KR | 10-1366649 | B1 | 10 March 2014 |
| | | | | KR | 10-2013-0085013 | A | 26 July 2013 |
| | | | | US | 2014-0334551 | A1 | 13 November 2014 |
| | | | | US | 9374595 | B2 | 21 June 2016 |
| | | | | WO | 2013-109092 | A1 | 25 July 2013 |
| KR | 10-2014-0019221 | A | 14 February 2014 | US | 2015-0146779 | A1 | 28 May 2015 |
| | | | | WO | 2014-014276 | A1 | 23 January 2014 |
| KR | 10-2022-0006054 | A | 14 January 2022 | CN | 113812163 | A | 17 December 2021 |
| | | | | CN | 113812163 | B | 25 November 2022 |
| | | | | EP | 3954128 | A1 | 16 February 2022 |
| | | | | JP | 2022-533074 | A | 21 July 2022 |
| | | | | JP | 7271723 | B2 | 11 May 2023 |
| | | | | US | 12003711 | B2 | 04 June 2024 |
| | | | | US | 2022-0070454 | A1 | 03 March 2022 |
| | | | | WO | 2020-228661 | A1 | 19 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230041947
- KR 1020240041429